# EUROPEAN PATENT SPECIFICATION

(11) **EP 1 806 816 B1**
(45) Date of publication and mention of the grant of the patent: **31.07.2013**
(21) Application number: 07100092.1
(22) Date of filing: 04.01.2007
(51) Int. Cl.: H02B 1/48

(54) **Mounting of a support frame for electrical switches**
Montage eines Stützrahmens für elektrische Schalter
Montage d'un cadre de support pour des commutateurs électriques

(30) Priority: 09.01.2006 IT TO20060004 U
(43) Date of publication of application: 11.07.2007
(73) Proprietor: SCHNEIDER ELECTRIC INDUSTRIES SAS, 92500 Rueil-Malmaison (FR)
(72) Inventor: MAGNO, Giorgio, I-24030, BREMBATE SOPRA (Bergamo) (IT)
(74) Representative: Fioravanti, Corrado

(56) References cited:
- EP-A- 1 172 909
- EP-A1- 0 989 649
- FR-A1- 2 791 515

## Description

The present invention relates to a switchboard enclosure, and in particular to the fitting of a support frame for electrical switches in the box of a switchboard enclosure.

Switchboard enclosures typically comprise a box in which is fixed by means of screws a frame comprising a pair of uprights linked by crosspieces or horizontal sections to support the electrical switches.

For reasons of convenience, installers detach the frame from the box and perform various operations (such as fitting the switches on the frame and connecting the cabling for the switches) with the frame resting on a work bench. When these operations have been completed, the installer has to refit the frame, now heavier because of the switches, in the box. It is difficult and not very safe to apply and screw in the fixing screws since the installer must also support the frame with the switches with one hand, holding the frame in a position such that the holes formed in the frame for the fixing screws are aligned with the threaded seats formed in the box behind it.

EP-A-1 172 909 and EP-A-0 989 649 disclose switchboard enclosures according to the preamble of claim 1.

The object of this invention is to remedy the above disadvantage, allowing easy, safe fitting of a frame in the box of a switchboard enclosure.

According to the present invention, the above-mentioned object is achieved by a switchboard enclosure as defined in claim 1.

The advantages and features of the present invention will become clear from the following detailed description of an embodiment, reference being made to the appended drawings which are provided purely by way of non-limiting example and in which:
- Figure 1 is an exploded perspective view of a frame and a box of a switchboard enclosure according to the present invention; and
- Figures 2 to 5 are enlarged perspective views which illustrate in detail the stages in fitting the frame to the box.

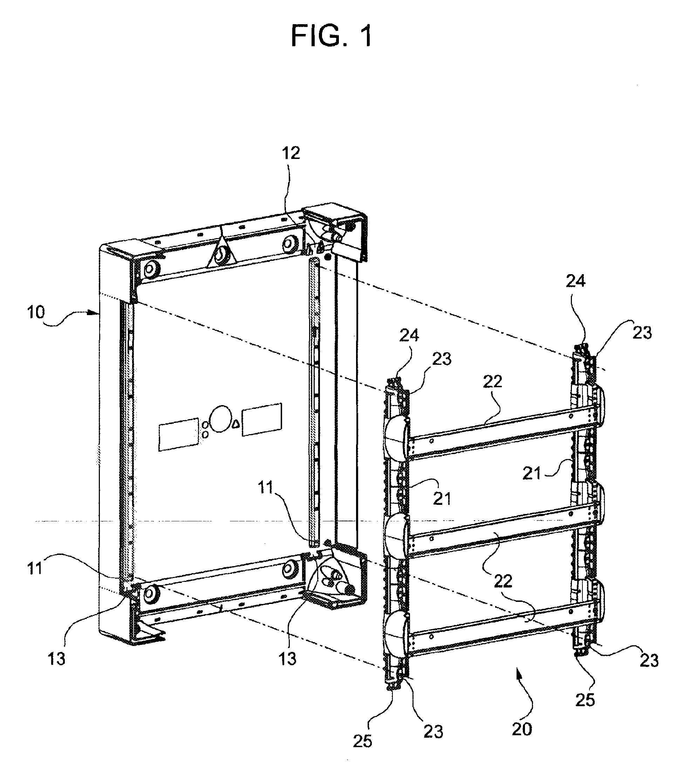

With reference initially to Figure 1, 10 indicates as a whole a rear box of a switchboard enclosure suitable for containing a plurality of electrical switches (not illustrated). A cover or front panel (not illustrated) is usually attached to the box 10, this front panel having one or more front apertures for access to the control buttons or levers of the electrical switches housed in the enclosure.

20 indicates a frame comprising a pair of 21 parallel, spaced apart lateral uprights. The uprights are linked by conventional crosspieces or horizontal sections 22 (DIN rails) to support the electrical switches. The uprights 21 are detachably fixed to the box 10 by means of screws (not illustrated) inserted through holes 23 formed through the uprights and engaged in threaded recesses 11 integral with the box 10.

As are used herein, terms indicating positions and orientations, such as "vertical", "horizontal", "upper" and "lower" should be interpreted with reference to the condition in which the switchboard enclosure is fitted on a vertical wall.

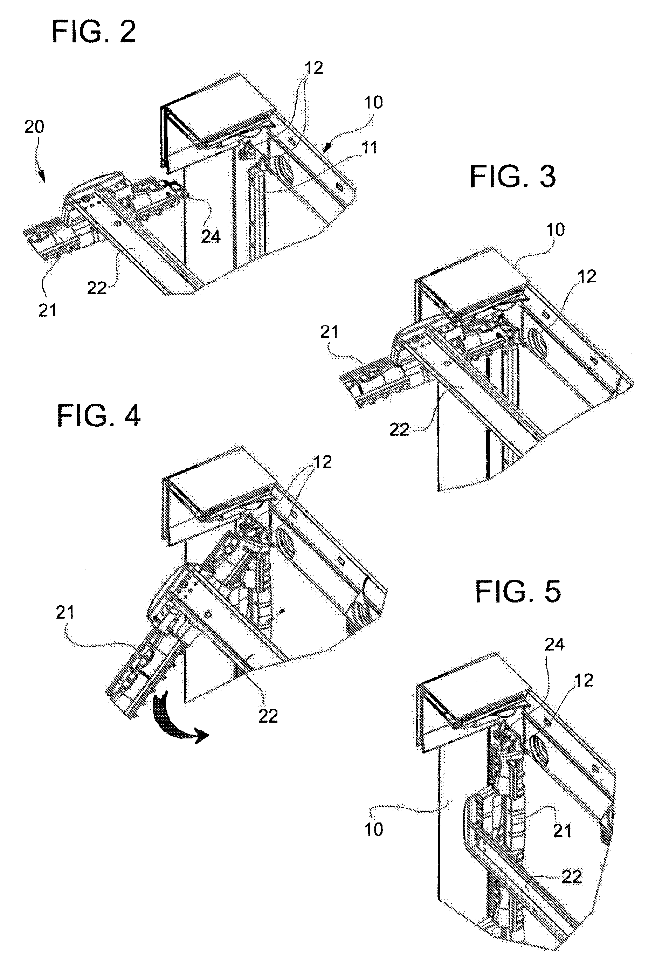

According to the present invention, the upper ends of the uprights 21 form respective horizontal pins 24 constituting hooking means which can be hooked in respective hooking seats 12 which are connected or formed integrally with the upper part of the box 10 and aligned along a horizontal axis. In the example in the appended drawings (Figure 2), each hooking seat 12 comprises a pair of hook formations which extend upwards to engage the respective opposite ends of the pins 24.

The installer can detach the frame from the box and fit the switches on the frame by resting it on a flat surface or on a work bench to facilitate his work. Having carried out the fitting, the installer fits onto the box 10 the assembly consisting of frame and switches. The frame, now heavier because of the switches, is hooked to the hooking seat 12 as illustrated in Figures 2 and 3, inserting the pins 24 in the seats 12. The frame then remains suspended on the box 11, and the weight of the frame itself and the switches hold the frame stably orientated vertically or resting against the box 10. The installer does not therefore have to concern himself with holding or manually supporting the frame while he fixes it to the box by screwing the fixing screws into the holes 23 and 11, and therefore has both hands free to perform these operations easily and safely.

In the example illustrated in the drawings, the uprights provide hooking pins 24, 25 at both ends, and the box 10 has further hooking seats 13 at the bottom of the lower part, in order to ensure that there is always the possibility of hooking the frame from its upper part even if this is fitted upside-down, and therefore to benefit from the aforementioned advantages.

The invention is of course not limited to the embodiment described and illustrated here, which has been given purely by way of example of the enclosure; the invention is however open to modification of shape and layout of parts, construction details and materials used. For example, the hooking means 12 and the related hooking seats 12 may be formed of moulded plastics material in a single piece with the respective uprights 21 and with the box 10, as in the embodiment illustrated in the drawings, or may consist of separate pieces or different materials (for example of metal).

## Claims

1. A switchboard enclosure, comprising:
- a box (10) for containing a plurality of electrical switches;
- a frame (20) removably fixable to fixing means or seats (11) of the box (10) and comprising a pair of vertical uprights (21) connected by horizontal crosspieces (22) for supporting electrical switches;
- hooking means (24) formed at the upper ends of the uprights (21) and corresponding hooking seats (12) which are aligned in a horizontal direction and are secured or integral with an upper part of the box to hook and suspend the frame (20) in a stable position which is substantially vertical or adjacent to the box (10), whereby the hooking means (24, 25) comprise at least one pair of horizontal pins (24) aligned along a horizontal axis;
**characterized in that**
the hooking seats (12) each comprise hook formations which extend upwards.

2. A switchboard enclosure according to claim 1, **characterized in that** the box (10) comprises two pairs of said hooking seats (12, 13) placed close to vertically opposed sides of the box.

3. A switchboard enclosure according to claim 1 or 2, **characterized in that** each upright (21) comprises, at each of its ends, one of said hooking means (24, 25).

## Patentansprüche

1. Schalttafelumrahmung, mit:
einem Kasten (10) zum Aufnehmen einer Vielzahl von elektrischen Schaltern;
einem Rahmen (20), der entfernbar an Befestigungseinrichtungen oder Aufnahmen (11) des Kastens (10) befestigbar ist und ein Paar vertikaler Stützen (21) aufweist, die durch horizontale Querstücke (22) zum Stützen elektrischer Schalter verbunden sind;
Einhakeinrichtungen (24), die an den oberen Enden der Stützen (21) ausgebildet sind und entsprechenden Einhakaufnahmen (12), die in einer horizontalen Richtung angeordnet und gesichert oder einstückig mit einem oberen Teil des Kastens sind, um den Rahmen (20) in eine stabile Position einzuhaken und zu sperren, die im Wesentlichen vertikal oder nahe des Kastens (10) ist, wodurch die Einhakeinrichtungen (24, 25) mindestens ein Paar horizontaler Stifte (24) aufweisen, die entlang einer horizontalen Achse ausgerichtet sind;
**dadurch gekennzeichnet, dass**
die Einhakaufnahmen (12) jeweils Einhakausbildungen aufweisen, die sich nach oben erstrecken.

2. Schalttafelumrahmung nach Anspruch 1, **dadurch gekennzeichnet, dass** der Kasten (10) zwei Paar der Einhakaufnahmen (12, 13) aufweist, die nahe vertikal gegenüberliegender Seiten des Kastens platziert sind.

3. Schalttafelumrahmung nach Anspruch 1 oder 2, **dadurch gekennzeichnet, dass** jede Stütze (21) an jeder ihrer Enden eine der Einhakeinrichtungen (24, 25) aufweist.

## Revendications

1. Coffret de tableau électrique comprenant :
- un boîtier (10) destiné à contenir une pluralité de commutateurs électriques ;
- un châssis (20) pouvant être fixé de façon amovible à un moyen de fixation ou à des sièges (11) du boîtier (10) et comprenant une paire de montants verticaux (21) reliés par des pièces transversales horizontales (22) pour supporter des commutateurs électriques ;
- un moyen d'accrochage (24) formé aux extrémités supérieures des montants (21) et de sièges d'accrochage correspondants (12) qui sont alignés dans une direction horizontale et qui sont fixés ou intégrés à une partie supérieure du boîtier pour accrocher et suspendre le châssis (20) dans une position stable qui est substantiellement verticale ou adjacente au boîtier (10), dans lequel le moyen d'accrochage (24, 25) comprend au moins une paire d'axes horizontaux (24) alignés sur un axe horizontal,
**caractérisé en ce que**
les sièges d'accrochage (12) comprennent chacun des structures de crochet qui s'étendent vers le haut.

2. Coffret de tableau électrique selon la revendication 1, **caractérisé en ce que** le boîtier (10) comprend deux paires desdits sièges d'accrochage (12, 13) placées près de côtés verticalement opposés du boîtier.

3. Coffret de tableau électrique selon la revendication 1 ou 2, **caractérisé en ce que** chaque montant (21) comprend, à chacune de ses extrémités, l'un desdits moyens d'accrochage (24, 25).
